# EUROPÄISCHE PATENTSCHRIFT

(11) **EP 3 714 161 B1**
(45) Veröffentlichungstag und Bekanntmachung des Hinweises auf die Patenterteilung: **01.12.2021**
(21) Anmeldenummer: 18800889.0
(22) Anmeldetag: 07.11.2018
(51) Int. Cl.: F03D 80/70, F16H 57/025, F16F 1/38, F16F 15/08

(54) **DREHMOMENTENSTÜTZANORDNUNG FÜR EIN WINDKRAFTGETRIEBE**
TORQUE SUPPORT ARRANGEMENT FOR A WIND POWER GEARBOX
ARRANGEMENT SUPPORT DE COUPLE POUR UNE TRANSMISSION D'ÉOLIENNE

(30) Priorität: 24.11.2017 DE 102017221020
(43) Veröffentlichungstag der Anmeldung: 30.09.2020
(73) Patentinhaber: ZF Friedrichshafen AG, 88046 Friedrichshafen (DE); ZF Wind Power Antwerpen NV, 3920 Lommel (BE)
(72) Erfinder: VANHOLLEBEKE, Frederik, 9700 oudenaarde (BE)
(86) Internationale Anmeldenummer: PCT/EP2018/080413
(87) Internationale Veröffentlichungsnummer: WO 2019/101516

(56) Entgegenhaltungen:
- CN-A- 104 864 013
- DE-A1-102011 053 015

## Beschreibung

Die vorliegende Erfindung betrifft eine Drehmomentenstützanordnung, geeignet für ein Windkraftgetriebe zur Übertragung einer Stützkraft auf eine Tragstruktur einer Windkraftanlage, wobei getriebeseitig mindestens ein radialer Stützarm mit einem zugeordneten Durchbruch zur Aufnahme eines horizontalen Stützbolzens vorgesehen ist, der eine lösbare Verbindung zu mindestens einem hierzu korrespondierenden Durchbruch einer an der Tragstruktur angeordneten Tragöseneinheit herstellt. Daneben betrifft die Erfindung auch eine Windkraftanlage zur Erzeugung elektrischer Energie mit einem Windkraftgetriebe, das mit einer solchen Drehmomentenstützanordnung ausgestattet ist.

Das Einsatzgebiet der vorliegenden Erfindung erstreckt sich vornehmlich auf Windkraftanlagen, welche - im Gegensatz zu sogenannten Direktläufern - mit einem zwischen dem Rotor und einem elektrischen Generator angeordneten Getriebe, dem Windkraftgetriebe, zur Übersetzung der Rotordrehzahl ins Schnelle ausgestattet sind. Die horizontale Hauptwellenlagerung konventioneller Windkraftanlagen erfolgt mittels Drei- oder Vierpunktlagerung, die aus einem Momentenlager oder zwei Einzellagern besteht, welche die auftretenden Gewichtskräfte sowie Gier- und Nickmomente aus dem Rotor vollständig in einen Maschinenträger überträgt. Der Maschinenträger bildet die ortsfeste Tragstruktur für den Antriebsstrang der Windkraftanlage bildet. Eine am Windkraftgetriebe angeordnete Drehmomentstütze muss im Rahmen der Vierpunktlagerung lediglich noch das Reaktionsmoment auf die Tragstruktur ableiten. Diese Vierpunktlagerung vermeidet eine Einleitung von Gewichtskräften und auch Gier- und Nickmomenten aus dem Rotor in das Windkraftgetriebe. Darüber hinaus ist ein Getriebetausch im Reparaturfall vergleichsweise einfach durchführbar. Zu diesem Zweck bildet die Drehmomentstütze zwischen Windkraftgetriebe und Tragstruktur eine lösbare Verbindung. Zur Schwingungsreduzierung beinhaltet die Drehmomentstütze oft mindestens ein im Momentenfluss liegendes Elastomerelement zur Isolierung einer Schwingungsübertragung in diese Tragstruktur hinein. Die vorliegende Erfindung widmet sich diesem Thema.

Aus der DE 10 2010 044 297 A1 geht eine Drehmomentstützanordnung hervor, welche hier aus zwei beidseits eines Windkraftgetriebes angeordneten Pendelstützen ausgebildet ist. Diese Bauform von Drehmomentstützen setzt das vom Windkraftgetriebe abzuleitende Reaktionsmoment in Zug- und Druckkräfte um. Während Pendelstützen eine recht weiche Drehmomentstütze mit deutlichen Betriebsverformungen darstellen, ist die Steifigkeit in Querrichtung sehr gering. Die hier offenbarte Bauform einer vertikal ausgerichteten Drehmomentstütze ist zur Abstützung von Drehmomenten der Größenordnung von ca. 3000 kNm ausgelegt. Die Drehmomentstütze umfasst eine Drehmomentplatte, welche über eine Vielzahl von Schrauben am Gehäuse des Windkraftgetriebes befestigt ist. Im Betrieb der Windkraftanlage resultiert aus der Drehbewegung des Rotors, welche über dessen Nabe an eine Antriebswelle und über diese an den Getriebeeingang des Windkraftgetriebes übertragen wird, ein Reaktionsmoment. Dieses Reaktionsmoment wird gegenüber dem Maschinenträger der Windkraftanlage abgestützt. Der die Tragstruktur bildende Maschinenträger ist eine Grundplatte, die in einer Gondel der Windkraftanlage angeordnet ist. Die Drehmomentstütze besteht im Wesentlichen aus der vorstehend erwähnten Drehmomentplatte, die in ein U-Profil mündet, welches an einem Dämpfungselement zur Anlage kommt, das im weiteren Kraftverlauf die Stützkraft an die Tragstruktur weiterleitet.

Die DE 10 2014 215 020 A1 offenbart demgegenüber eine gattungsgemäße Drehmomentstützanordnung, welche nach dem Buchse-Bolzen-Prinzip ausgebildet ist. Hierbei ist am Gehäuse des Windkraftgetriebes ein sich radial hiervon erstreckender Stützarm angeformt, der mit einem Durchbruch zur Aufnahme eines Bolzens versehen ist. Das Windkraftgetriebe weist bei der hier offenbarten Ausführungsform zwei gegenüberliegend am Gehäuse angeordnete radiale Stützarme auf, zwischen denen eine Aufteilung des abzuleitenden Reaktionsmoments stattfindet. Der horizontal verlaufende Stützbolzen stellt eine lösbare Verbindung zu einem korrespondierenden - hier nicht weiter dargestellten - Durchbruch einer Tragöseneinheit der Tragstruktur her. Im Unterschied zu den vorstehend beschriebenen Pendelstützen sind Drehmomentstützen dieser Art vornehmlich Scher- und Biegekräften ausgesetzt.

Windkraftanlagen mit einem Lagerungskonzept der vorstehend beschriebenen Art weisen eine Eigenschwingung auf, bei welcher der komplette Antriebsstrang ins Schlingern geraten kann. Dieses Aufschwingen, an dem auch das Windkraftgetriebe beteiligt ist, führt zu großen Vertikalkräften in Richtung der Tragstruktur. Falls die Resonanzschwingung innerhalb des Betriebsdrehzahlbereichs der Windkraftanlage liegt, so äußert sich dies auch in typischen lauten Störtönen. Diese Resonanzschwingungen treten typischerweise bei einem Abfall der Windgeschwindigkeit auf, wobei das von den Rotorblättern ausgelöste Maskierungsgeräusch zwar mit geringer Lautstärke anfällt, jedoch einen hohen Resonanzton auslöst.

Diese störenden Resonanzschwingungen können vermieden werden, wenn sie nicht durch das Windkraftgetriebe angeregt werden. Theoretisch besteht hierzu die Möglichkeit, ein Windkraftgetriebe einzusetzen, dessen Erregungsfrequenzen sich nicht mit den Eigenschwingungen des Antriebsstrangs über den Betriebsdrehzahlbereich überschneiden. Dies beschränkt allerdings stark die Auswahlmöglichkeiten hinsichtlich des Windkraftgetriebes. Daneben ist es auch denkbar, die zum Aufschwingen des Antriebsstrangs führende Eigenfrequenz derart zu reduzieren, dass diese sich nicht mit den Erregungsfrequenzen des Windkraftgetriebes über den Betriebsdrehzahlbereich überschneidet. Diese Lösung ist allerdings nur möglich, wenn die Masse des Windkraftgetriebes stark erhöht wird oder die Steifigkeit der Drehmomentstützen stark reduziert wird. Hierfür müssten die Drehmomentstützen besonders weich gelagert werden. Allerdings reduziert diese Maßnahme auch beträchtlich die Standzeit der Drehmomentstützen, so dass dieser Lösungsansatz als nicht praktikabel erscheint.

Eine weitere Drehmomentenstützanordnung ist in CN 104864013 A offenbart.

Es ist daher die Aufgabe der vorliegenden Erfindung, eine Drehmomentenstützanordnung für ein Windkraftgetriebe zur Übertragung einer Stützkraft auf eine Tragstruktur einer Windkraftanlage zu schaffen, mit welcher Resonanzschwingungen des Antriebsstrangs mit einfachen technischen Mitteln wirkungsvoll reduziert werden, ohne dass die Standzeit der Drehmomentenstützanordnung beeinträchtigt wird.

Die Erfindung schließt die technische Lehre ein, dass der mindestens eine Durchbruch der Tragöseneinheit mit einer lastabhängig unterschiedlich steifen Elastomerlagerbuchse versehen ist, in welche der Stützbolzen eingesteckt ist. Diese spezielle Elastomerlagerbuchse besteht aus einem weichen Bereich geringer Steifigkeit und mindestens einem demgegenüber härteren Bereich höherer Steifigkeit.

Mit anderen Worten wird eine Elastomerlagerbuchse mit unterschiedlichen Steifigkeitsbereichen vorgeschlagen, mit welcher eine lastabhängig wirkende Drehmomentstütze realisierbar ist. Dabei können die unterschiedlichen Steifigkeitsbereiche durch das geometrische Design der Elastomerlagerbuchse realisiert werden.

Erfindungsgemäß stellt der weiche Bereich geringerer Steifigkeit einen permanenten Kontakt zwischen dem Stützarm und dem Stützbolzen her, so dass dieser Bereich den Kraftfluss durch die Drehmomentstütze im Bereich einer geringen Belastung gewährleistet. Der harte Bereich höherer Steifigkeit kommt dagegen erst ab einer definierten Mindestbelastung in Kontakt zwischen Stützarm und Stützbolzen, so dass dieser harte Bereich den Kraftfluss erst ab einer höheren Belastung gewährleistet. Diese Maßnahme führt bei geringeren Belastungen der Drehmomentstütze und geringeren Drehzahlen zu reduzierten Resonanzschwingungen, ohne dass hierdurch die Standzeit der Elastomerlagerbuchse verringert wird. Denn in dieser Situation ist die verschleißverursachende Belastung gering und dennoch findet eine hinreichende Drehmomentabstützung statt. Steigt die Belastung der Drehmomentstütze dahingehend an, dass die definierte Mindestbelastung überschritten wird, so äußert sich diese Situation darin, dass der harte Bereich in Kontakt zwischen Stützarm und Stützbolzen kommt, so dass hierüber der wesentliche Kraftfluss geführt wird. In dieser Situation werden die mit der hohen Belastung verbundenen hohen Resonanzschwingungen bei hohen Drehzahlen reduziert. Dies gewährleistet eine hohe Standzeit der Elastomerlagerbuchse wegen der in dieser Situation wirkenden hohen Steifigkeit. Hierbei besteht die Möglichkeit, durch Veränderung des Anteils des weichen Bereichs gegenüber dem härteren Bereich die Reduzierung der Resonanzschwingungen auf das vorliegende Frequenzspektrum einer Windkraftanlage anzupassen. Dabei kann die Anpassung derart erfolgen, dass die Resonanz lediglich für diejenigen Frequenzen reduziert wird, welche bei einem Drehzahlabfall angeregt werden würden, um die insbesondere hierbei auftretenden Störtöne zu eliminieren, ohne dass die Standzeit der Elastomerlagerbuchse durch die hierbei wirksame geringe Steifigkeit des weichen Bereichs beeinträchtigt wird. Denn die Standzeit der Elastomerlagerbuchse wird maßgeblich durch Betriebssituationen mit höherer Belastung, insbesondere also in Hochdrehzahlsituationen, dominiert. Insoweit bildet der verschleißbeständigere härtere Bereich der Elastomerlagerbuchse also eine Art Schutzrahmen für den vorzugsweise für die Resonanzdämpfung in Drehzahlabfallsituationen benötigten weichen Bereich der Elastomerlagerbuchse.

Gemäß einer nicht beanspruchten Ausführungsform der Elastomerlagerbuchse zur Verwendung bei Drehmomentstützen an Windkraftgetrieben wird vorgeschlagen, dass der weiche Bereich der lastabhängig unterschiedlich steifen Elastomerlagerbuchse eine um bis zu 50 % geringere Rollsteifigkeit als der harte Bereich aufweist. Diese Dimensionierung stellt ein Optimum zwischen einer Reduzierung von typischen Resonanzschwingungen und hoher Lebensdauer dar. Die Steifigkeit einer Elastomerlagerbuchse wird gewöhnlich in Newton pro Meter (N/m) ausgedrückt. Ist der Abstand zwischen einer Elastomerlagerbuchse und einem Bolzen bekannt, ist die hieraus resultierende Rollsteifigkeit aussagekräftiger, die in Nm/rad ausgedrückt wird. Bei der erfindungsgegenständlichen Anwendung beträgt die Rollsteifigkeit gewöhnlich 4E8 Nm/rad bis 4E9 Nm/rad, abhängig von der Leistungsklasse der Windkraftanlage, der Anzahl der Lagerbuchsen, etc. Eine um bis zu 50% geringere Rollsteifigkeit des weichen Bereichs führt zu einer theoretisch maximalen Frequenzreduktion um bis zu ca. 30%. Bereits eine Frequenzreduktion um 15% hat einen beträchtlichen Einfluss auf das Resonanzverhalten, das typischerweise in einem Bereich zwischen 40Hz und 100Hz > -15% > 35Hz zu 85Hz liegt. Diese Frequenzreduktion führt bereits zu einer Verschiebung von Störtönen in den nichthörbaren Bereich.

Vorzugsweise sollte der Bereich geringerer Steifigkeit in Reihe geschaltet zum harten Bereich höherer Steifigkeit angeordnet sein. Hierdurch lässt sich in einfacher Weise sicherstellen, dass die beiden unterschiedlichen Steifigkeitsbereiche der Elastomerlagerbuchse bei ansteigender oder abfallender Belastung wie gewünscht nacheinander zur Wirkung kommen. Für eine konstruktive Umsetzung einer solchen Reihenschaltung sind ganz unterschiedliche konstruktive Lösungen denkbar. So ist es beispielsweise möglich, den weichen Bereich geringerer Steifigkeit durch mindestens einen an einer hohlzylindrischen Elastomerlagerbuchse angeformten Außenring auszubilden. Dieses Ausführungsbeispiel einer konstruktiven Umsetzung der erfindungsgemäßen Lösung lässt sich fertigungstechnisch mit wenig Aufwand umsetzen. Hierbei kann die Elastomerlagerbuchse insgesamt aus demselben Elastomermaterial bestehen und der weiche Bereich geringerer Steifigkeit entsteht durch die Geometrie des Außenrings, dessen Höhe geringer als die Gesamthöhe der Elastomerlagerbuchse ist. Indem die Höhe des Außenrings im Verhältnis zur Höhe der gesamten Elastomerlagerbuchse variiert wird, lässt sich eine Dimensionierung der Elastomerlagerbuchse hinsichtlich des weichen Bereichs in Kombination mit dem harten Bereich in einfacher Weise durchführen.

Eine nicht beanspruchte Ausführungsform lässt sich konstruktiv dadurch umsetzen, indem die Mantelfläche oder der Durchbruch der Elastomerlagerbuchse konisch ausgebildet ist. Bei dieser Ausführungsform würde die Tragöseneinheit beziehungsweise der Stützbolzen bei steigender Belastung mit immer mehr Material der Elastomerlagerbuchse des konischen Bereichs zur Anlage kommen, wodurch sich die Steifigkeit der Lagerung erhöht.

Gemäß einer anderen nicht beanspruchten Ausführungsform wird vorgeschlagen, die Elastomerlagerbuchse einen weichen Bereich aufweist, der durch einen innenadial und/oder außenradial in einem aus einem Hartelastomerkörper mit im wesentlichen H-förmigen Querschnitt eingefügten Weichelastomerring gebildet ist. Es ist auch denkbar den Weichelastomerring wegzulassen, dessen Funktion dann durch eine gleichwertige Umlaufnut übernommen wird. Bei geringer Belastung wird die Steifigkeit der Elastomerlagerbuchse im wesentlichen durch die beiden randseitig schmalen Hartelastomerflanken und dem mindestens einen Weichelastomerring bzw. der mindestens einen Umlaufnut bestimmt. Bei hoher Belastung wird der Weichelastomerring - falls vorhanden - komprimiert und die Steifigkeit der erfindungsgemäß lastabhängig unterschiedlich steifen Elastomerlagerbuchse erhöht sich.

Vorzugsweise sollte der mindestens eine Durchbruch der Tragöseneinheit einen Durchmesser aufweisen, der größer als der Durchmesser des Durchbruchs im Tragarm ist, um die Elastomerlagerbuchse aufzunehmen. In Verbindung damit wirkt der Stützbolzen direkt mit dem Durchbruch am Stützarm zusammen, wobei die Verbindung vorzugsweise als Presspassung ausgebildet ist. Eine zusätzliche Sicherung der Position des Stützbolzens kann über Sicherungsringe oder dergleichen erfolgen.

Gemäß einer bevorzugten Ausführungsform besteht die Tragöseneinheit aus zwei parallel beabstandet zueinander angeordneten Tragösen, in deren Zwischenraum der Stützarm zum Eingriff kommt. Dabei stehen der Durchbruch im Stützarm sowie der mindestens eine Durchbruch der Tragöseneinheit in fluchtender Übereinstimmung zueinander, um den Stützbolzen aufzunehmen. Bei dieser Ausführungsform kommen zwei Elastomerlagerbuchsen zum Einsatz, welche jeweils einer Tragöse der Tragöseneinheit zugeordnet sind. Die beiden Elastomerlagerbuchsen sind hierbei vorzugsweise identisch ausgebildet und additiv wirksam.

Weitere die Erfindung verbessernde Maßnahmen werden nachstehend gemeinsam mit der Beschreibung bevorzugter Ausführungsbeispiele der Erfindung anhand der Figuren näher dargestellt. Es zeigt:
- Fig. 1: eine schematische Darstellung eines Antriebsstrangs einer Windkraftanlage mit einem Windkraftgetriebe, das mit einer Drehmomentenstützanordnung ausgestattet ist,
- Fig. 2: einen schematischen Längsschnitt durch die Drehmomentenstützanordnung in Fig. 1,
- Fig. 3: einen Detaillängsschnitt der Elastomerlagerbuchse aus Fig. 2,
- Fig. 4: einen Detailquerschnitt einer Elastomerlagerbuchse nach einer nicht beanspruchten Ausführungsform, und
- Fig. 5: einen Detailquerschnitt einer Elastomerlagerbuchse nach einer weiterennicht beanspruchtenAusführungsform.

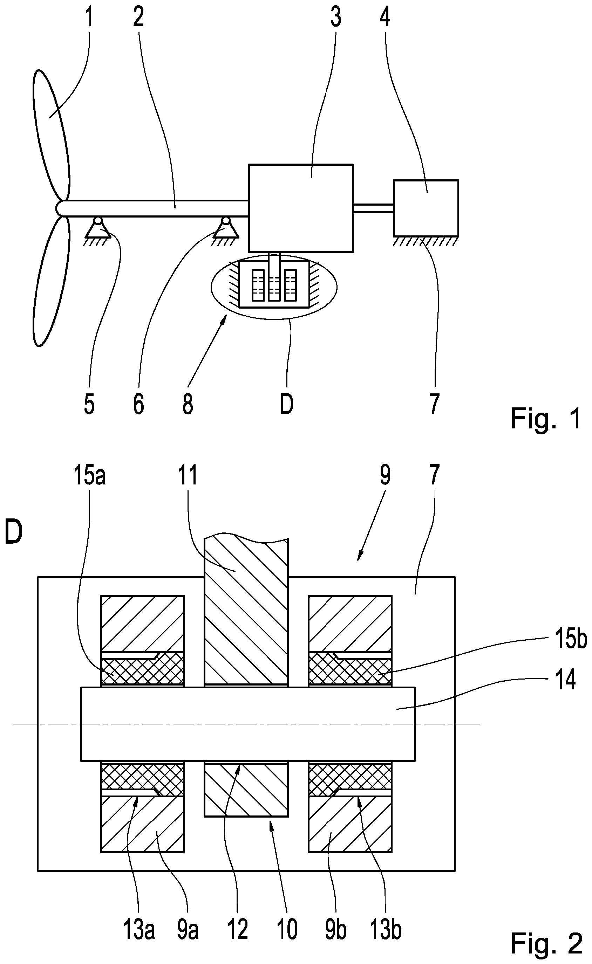

Gemäß Fig. 1 umfasst ein hier schematisch dargestellter Antriebsstrang einer Windkraftanlage einen windbeaufschlagbaren Rotor 1, dessen Drehbewegung über eine Rotorwelle 2 eingangsseitig eines Windkraftgetriebes 3 zugeführt wird. Ausgangsseitig treibt das Windkraftgetriebe 3 mit höherer Drehzahl einen elektrischen Generator 4 zur Erzeugung elektrischer Energie an. Die Rotorwelle 2 ist mehrfach gelagert, nämlich rotorseitig mit einem Festlager 5 und getriebeseitig mit einem Loslager 6. Das Festlager 5, das Loslager 6, der Generator 4 sowie auch das Getriebe 3 stützen sich an einer Tragstruktur 7 (schematisch angedeutet) ab. Hierfür ist das Windkraftgetriebe 3 mit einer Drehmomentenstützanordnung 8 versehen.

Die in Fig. 2 im Detail dargestellte Drehmomentenstützanordnung besteht im Wesentlichen aus einer Tragöseneinheit 9, welche hier aus zwei parallel beabstandet zueinander angeordneten Tragösen 9a und 9b besteht, die an der Tragstruktur 7 der Windkraftanlage befestigt sind. Die beiden Tragösen 9a und 9b bilden einen Zwischenraum 10, in welchen ein am Gehäuse des Windkraftgetriebes 3 angeformter Stützarm 11 derart zum Eingriff kommt, dass dessen Durchbruch 12 in fluchtender Übereinstimmung mit Durchbrüchen 13a und 13b der Tragösen 9a bzw. 9b steht. Die beiden Tragösen 9a und 9b der Tragöseneinheit 9 sowie der Stützarm 11 des - nicht weiter dargestellten - Windkraftgetriebes 3 sind aus einem spanend bearbeiteten Stahlmaterial hergestellt, wobei die Durchbrüche 12, 13a und 13b durch Bohren gefertigt sind.

Ein ebenfalls aus Stahl bestehender zylindrischer Stützbolzen 14 ist per Presspassung mit dem Durchbruch 12 im Stützarm 11 verbunden. Die beidseitigen Schenkel des Stützbolzens 14 ragen durch die Durchbrüche 13a und 13b der beiden Tragösen 13a bzw. 13b, wobei dazwischen jeweils eine spezielle Elastomerlagerbuchse 15a bzw. 15b gemäß der vorliegenden Erfindung angeordnet ist. Zwecks Aufnahme der beiden Elastomerlagerbuchsen 15a und 15b weisen die beiden Durchbrüche 13a und 13b der Tragöseneinheit 9 einen Durchmesser auf, der größer als der Durchmesser des Durchbruchs 12 im Tragarm 11 ist.

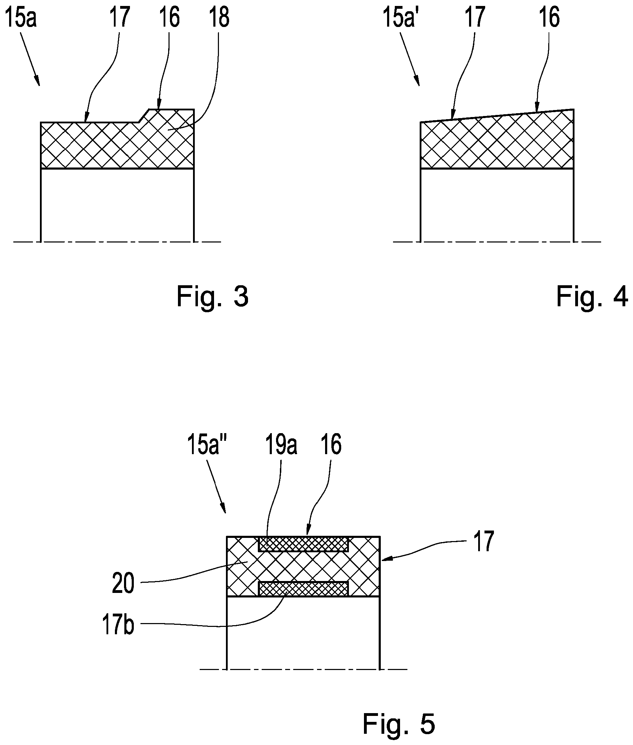

Gemäß Fig. 3 weist die hier exemplarisch dargestellte Elastomerlagerbuchse 15a einen weichen Bereich 16 geringer Steifigkeit und einen benachbart hierzu angeordneten Bereich 17 höherer Steifigkeit auf. Der Bereich 16 geringer Steifigkeit kommt dabei in einen permanenten Kontakt mit der - nicht weiter dargestellten - Tragöse. Im Gegensatz hierzu kommt der demgegenüber härtere Bereich 17 erst ab einer definierten Mindestbelastung in Kontakt mit der Tragöse. Dies wird dadurch erzielt, indem der weiche Bereich 16 geringerer Steifigkeit durch einen angeformten Außenring 18 gebildet ist. Durch den gegenüber der Gesamtlänge der Elastomerlagerbuchse 15a schmaleren Außenring 18 wird der weiche Bereich 16 gebildet.

Bei dem nicht beanspruchten Ausführungsbeispiel gemäß Fig. 4 ist die äußere Mantelfläche der Elastomerlagerbuchse 15a' konisch ausgebildet, so dass ein allmählicher Übergang vom weichen Bereich 16 zum harten Bereich 17 stattfindet.

Bei dem nicht beanspruchten Ausführungsbeispiel gemäß Fig. 5 weist die Elastomerlagerbuchse 15" einen zentral angeordneten weichen Bereich 16 auf, der durch einen innenadial und einem außenradial in einem aus einem Hartelastomerkörper 20 mit im wesentlichen H-förmigen Querschnitt eingefügten Weichelastomerring 19a bzw. 19b gebildet ist. Dieser kann gegebenenfalls auch weggelassen werden. Der harte Bereich 17 befindet sich insoweit im Kern dieser Elastomerlagerbuchse 15".

Die Erfindung beschränkt sich nicht auf die vorstehend beschriebenen bevorzugten Ausführungsbeispiele einer Elastomerlagerbuchse. Es sind vielmehr auch Abwandlungen hiervon denkbar. Die Erfindung ist in den nachfolgenden Ansprüchen definiert.

Es ist möglich, durch eine Auswahl verschiedener Materialien die Steifigkeit der Elastomerlagerbuchse entsprechend den Erfordernissen zu gestalten. So kann der weiche Bereich der Elastomerlagerbuchse aus einem Elastomermaterial mit geringerer Shore-Härte als der demgegenüber härtere Bereich ausgebildet sein. Eine solche Elastomerlagerbuchse kann sowohl einstückig ausgeführt sein als auch mehrteilig. Dabei kann beispielsweise ein weicher Elastomerring auf einen harten Elastomerring aufgeschoben werden. Im Verschleißfall müsste der weiche Elastomerring ausgetauscht werden, wohingegen der harte Elastomerring weiterverwendet werden kann.

Bezugszeichen
- 1: Rotor
- 2: Rotorwelle
- 3: Windkraftgetriebe
- 4: elektrischer Generator
- 5: Festlager
- 6: Loslager
- 7: Tragstruktur
- 8: Drehmomentenstützanordnung
- 9: Tragöseneinheit
- 10: Zwischenraum
- 11: Stützarm
- 12: Durchbruch
- 13: Durchbruch
- 14: Stützbolzen
- 15: Elastomerlagerbuchse
- 16: weicher Bereich
- 17: harter Bereich
- 18: Außenring
- 19: Weichelastomerring
- 20: Hartelastomerkörper

## Patentansprüche

1. Drehmomentenstützanordnung für ein Windkraftgetriebe (3) zur Übertragung einer Stützkraft auf eine Tragstruktur (7) einer Windkraftanlage, wobei getriebeseitig mindestens ein radialer Stützarm (11) mit einem zugeordneten Durchbruch (12) zur Aufnahme eines horizontalen Stützbolzens (14) vorgesehen ist, der eine lösbare Verbindung zu mindestens einem hierzu korrespondierenden Durchbruch (13a; 13b) einer an der Tragstruktur (7) angeordneten Tragöseneinheit (9) herstellt, wobei der mindestens eine Durchbruch (13a; 13b) der Tragöseneinheit (9) mit einer lastabhängig unterschiedlich steifen Elastomerlagerbuchse (15a; 15b) versehen ist, in welche der Stützbolzen (14) eingesteckt ist, wobei die Elastomerlagerbuchse (15a; 15b) aus mindestens einem weicheren Bereich (16) geringer Steifigkeit und mindestens einem demgegenüber härteren Bereich (17) höherer Steifigkeit besteht, wobei der weichere Bereich (16) geringerer Steifigkeit einen permanenten Kontakt zwischen Tragöseneinheit (9) und Stützbolzen (14) herstellt, wohingegen der härtere Bereich (17) höherer Steifigkeit erst ab einer definierten Mindestbelastung in Kontakt zwischen Tragöseneinheit (9) und Stützbolzen (14) kommt, **dadurch gekennzeichnet, dass** der weichere Bereich (16) geringerer Steifigkeit durch einen angeformten, gegenüber der Gesamtlänge der Elastomerlagerbuchse (15a, 15b) schmaleren Außenring (18) gebildet ist.

2. Drehmomentenstützanordnung nach Anspruch 1, **dadurch gekennzeichnet, dass** der mindestens eine Durchbruch (13a; 13b) der Tragöseneinheit (9) einen Durchmesser aufweist, der größer als der Durchmesser des Durchbruchs (12) im Tragarm (11) ist, um die Elastomerlagerbuchse (15a; 15b) aufzunehmen.

3. Drehmomentenstützanordnung nach einem der vorstehenden Ansprüche, **dadurch gekennzeichnet, dass** der Stützbolzen (14) eine Presspassung mit dem Durchbruch (12) im Stützarm (11) ausbildet.

4. Drehmomentenstützanordnung nach einem der vorstehenden Ansprüche, **dadurch gekennzeichnet, dass** die Tragöseneinheit (9) aus zwei parallel beabstandet zueinander angeordneten Tragösen (9a, 9b) besteht, in deren Zwischenraum (10) der Stützarm (11) derart zum Eingriff kommt, dass dessen Durchbruch (12) in fluchtender Übereinstimmung mit den Durchbrüchen (13a, 13b) seitens der Tragösen (9a, 9b) steht.

5. Drehmomentenstützanordnung nach einem der vorstehenden Ansprüche, **dadurch gekennzeichnet, dass** die Tragöseneinheit (9) und der Stützarm (11) aus einem spanend bearbeiteten Stahlmaterial hergestellt sind.

6. Windkraftanlage zur Erzeugung elektrischer Energie mit einem Windkraftgetriebe (3) das auf einer Tragstruktur (7) montiert ist, **gekennzeichnet durch** mindestens eine zwischen dem Windkraftgetriebe (3) und der Tragstruktur (7) angeordnete Drehmomentenstützanordnung nach einem der vorstehenden Ansprüche.

## Claims

1. Torque support arrangement for a wind power transmission (3) for transmitting a support force to a load-bearing structure (7) of a wind turbine, wherein on the transmission side there is at least one radial support arm (11) with an associated opening (12) for accommodating a horizontal support bolt (14) which establishes a releasable connection with at least one corresponding opening (13a; 13b) of a load-bearing eye unit (9) arranged on the load-bearing structure (7), wherein the at least one opening (13a; 13b) of the load-bearing eye unit (9) is provided with an elastomer bearing bush (15a; 15b) whose stiffness is load-dependent and into which the support bolt (14) is inserted, wherein the elastomer bearing bush (15a; 15b) consists of at least one softer region (16) of lower stiffness and at least one opposite harder region (17) of higher stiffness, wherein the softer region (16) of lower stiffness establishes permanent contact between the load-bearing eye unit (9) and the support bolt (14), whereas the harder region (17) of higher stiffness comes into contact between the load-bearing eye unit (9) and the support bolt (14) only from a defined minimum loading, **characterized in that** the softer region (16) of lower stiffness consists of a moulded-on outer ring (18) that is narrower than the overall length of the elastomer bearing bush (15a, 15b).

2. Torque support arrangement according to Claim 1, **characterized in that** the at least one opening (13a; 13b) of the load-bearing eye unit (9) has a diameter that is greater than the diameter of the opening (12) in the support arm (11), in order to accommodate the elastomer bearing bush (15a; 15b).

3. Torque support arrangement according to either of the preceding claims, **characterized in that** the support bolt (14) forms a press fit with the opening (12) in the support arm (11).

4. Torque support arrangement according to one of the preceding claims, **characterized in that** the load-bearing eye unit (9) consists of two mutually parallel and spaced-apart load-bearing eyes (9a, 9b) in whose interspace (10) the support arm (11) comes to engage in such a way that the opening (12) of the latter is aligned flush with the openings (13a, 13b) on the side of the load-bearing eyes (9a, 9b).

5. Torque support arrangement according to one of the preceding claims, **characterized in that** the load-bearing eye unit (9) and the support arm (11) are made of a steel material that has been machined in a chip-removing manner.

6. Wind turbine for generating electrical energy with a wind power transmission (3) that is mounted on a load-bearing structure (7), **characterized by** at least one torque support arrangement, according to one of the preceding claims, arranged between the wind power transmission (3) and the load-bearing structure (7).

## Revendications

1. Agencement de support de couple pour une transmission d'éolienne (3), destiné à transmettre une force de support à une structure porteuse (7) d'une installation éolienne, au moins un bras de support radial (11) muni d'une percée associée (12) destinée à recevoir un goujon de support horizontal (14) étant prévu côté transmission, qui établit une liaison amovible avec au moins une percée (13a ; 13b) correspondant à celle-ci d'une unité d'œillets porteurs (9) agencée sur la structure porteuse (7), l'au moins une percée (13a ; 13b) de l'unité d'œillets porteurs (9) étant pourvue d'un coussinet en élastomère (15a ; 15b) différemment rigide en fonction de la charge, dans lequel est inséré le goujon de support (14), le coussinet en élastomère (15a ; 15b) étant constitué d'au moins une zone plus tendre (16) de rigidité plus faible et d'au moins une zone en revanche plus dure (17) de rigidité plus élevée, la zone plus tendre (16) de rigidité plus faible établissant un contact permanent entre l'unité d'œillets porteurs (9) et le goujon de support (14), tandis que la zone plus dure (17) de rigidité plus élevée ne vient en contact entre l'unité d'œillets porteurs (9) et le goujon de support (14) qu'à partir d'une sollicitation minimale définie, **caractérisé en ce que** la zone plus tendre (16) de rigidité plus faible est formée par un anneau extérieur (18) moulé, plus mince par rapport à la longueur totale du coussinet en élastomère (15a, 15b).

2. Agencement de support de couple selon la revendication 1, **caractérisé en ce que** l'au moins une percée (13a ; 13b) de l'unité d'œillets porteurs (9) présente un diamètre qui est supérieur au diamètre de la percée (12) dans le bras porteur (11), afin de recevoir le coussinet en élastomère (15a ; 15b).

3. Agencement de support de couple selon l'une quelconque des revendications précédentes, **caractérisé en ce que** le goujon de support (14) forme un ajustement serré avec la percée (12) dans le bras de support (11).

4. Agencement de support de couple selon l'une quelconque des revendications précédentes, **caractérisé en ce que** l'unité d'œillets porteurs (9) est constituée de deux œillets porteurs (9a, 9b) agencés écartés parallèlement l'un de l'autre, dans l'espace intermédiaire (10) desquels le bras de support (11) vient en prise de telle sorte que sa percée (12) est alignée avec les percées (13a, 13b) du côté des œillets porteurs (9a, 9b).

5. Agencement de support de couple selon l'une quelconque des revendications précédentes, **caractérisé en ce que** l'unité d'œillets porteurs (9) et le bras de support (11) sont fabriqués en un matériau en acier usiné par enlèvement de copeaux.

6. Installation éolienne pour la production d'énergie électrique, munie d'une transmission éolienne (3) qui est montée sur une structure porteuse (7), **caractérisée par** au moins un agencement de support de couple selon l'une quelconque des revendications précédentes agencé entre la transmission éolienne (3) et la structure porteuse (7).
